Europäisches Patentamt

European Patent Office

Office européen des brevets

(19)

(11) Veröffentlichungsnummer: **0 384 002**
**A2**

(12) **EUROPÄISCHE PATENTANMELDUNG**

(21) Anmeldenummer: **89118280.0**

(22) Anmeldetag: **03.10.89**

(51) Int. Cl.⁵: **G01N 19/08**

(30) Priorität: **20.02.89 EP 89102924**

(43) Veröffentlichungstag der Anmeldung:
**29.08.90 Patentblatt 90/35**

(84) Benannte Vertragsstaaten:
**AT BE CH DE ES FR GB GR IT LI LU NL SE**

(71) Anmelder: **WIDMANN SICHERUNGSANLAGEN GMBH**
**Schulstrasse 19**
**D-7981 Vogt(DE)**

(72) Erfinder: **Jocham, Berthold**
**Bürsten 6**
**D-7988 Wangen(DE)**

(54) **Oberflächenprüfung an Rundringen.**

(57) Mit dieser mechanischen Einrichtung werden Rundringe problemlos erfasst und um den in der Lage immer gleichen Mittelpunkt gedreht. Durch die Verformung, mittels zweier gegenläufiger Formbakken, aus der Kreisform, entstehen am Ring je nach Drehposition Zugspannen an der Oberfläche des Rundringes. Kleinste Oberflächenfehler in Form von z.B. Rissen werden dadurch sichtbar. Die Bildfenster der CCD-Kamera nehmen jeweils einen bestimmten Umfang des Ringquerschnitts auf, in dem Bereich, wo die Oberflächenspannung erhöht ist. Durch die mechanisch sichere Verformung bei immer gleicher Lage und Form des Rundringes ist erst eine Automation des Prüfvorgangs mittels digitaler Bildverarbeitung möglich, welche den Einsatz von Rundringen für Sicherheitssysteme (z.B. im Auto) erfordert.

*Abbildung I*

EP 0 384 002 A2

Die Erfindung soll in der Gummiindustrie zur Oberflächenprüfung von Rundringen, wie z.B. o-Ringen, eingesetzt werden.

Der Zweck der Erfindung ist, daß die Oberflächenprüfung schneller, einhundertprozentig sicher und mit konkreten Toleranzvorgaben ermöglicht wird.

Ein Großteil der Rundringe für die Industrie stellt keine hohen Qualitätsanforderungen, d.h. die Masse wird nach dem Vulkanisieren ungeprüft an den Verkauf abgegeben.

Zunehmende Qualitätsanforderungen bedingt durch die Produzentenhaftung oder bei Sicherheitsanlagen, wie z.B. ABS-Bremssystemen, müssen Rundringe in der geforderten Qualität geliefert werden.

Solche Sicherheitsteile dürfen keine Risse, Lunker, Poren oder Fremdstoffe aufweisen, die die Dichtfähigkeit beeinflussen könnten.

Weltweit wird die Oberfläche manuell mit dem Auge direkt oder durch ein Vergrößerungsgerät geprüft. Während dieses Prüfvorgangs wird der Ring rundum auf der gesamten Ringoberfläche geprüft, wobei der Ring ständig verformt wird, um versteckte bzw. schlecht erkennbare Fehler zu erkennen.

Mit dieser herkömmlichen Prüfung werden keine zuverlässigen Prüfergebnisse erreicht, d. h. es ist keine Hundertprozent-Prüfung erreichbar, auch schwanken je nach Stimmungslage des Prüfers die Toleranzgrenzwerte. Weiters ist die Prüfarbeit an der Grenze zur zumutbaren Belastbarkeit für den Menschen. Es scheiterten bisherige Versuche immer daran, daß versteckte Fehler (ohne Deformierung nicht sichtbar) nicht erkannt wurden.

Der Erfindung liegt die Aufgabe zugrunde, die Oberflächenprüfung von Rundringen zu mechanisieren und dadurch eine 100% Kontrolle, bei Einhaltung sämtlicher Toleranzwerte, zu ermöglichen.

Anhand der 3 beigefügten Zeichnungen ist die Lösung der Aufgabe erklärbar.

Zur Beschickung fahren die Formbacken (2) bis zum Ende gegenläufig auseinander, um den Raum freizugeben. Der Prüfling (1) wird auf Mitte Formbacke (2) angehoben, die beiden Formbacken (2) fahren wieder gegenläufig zurück und klemmen den Prüfling (1) zwischen den angepaßten Formrillen der Formbacken (2) ein. Der Abstand zwischen den Formbacken (2) bleibt während der Prüfung konstant und muß nur ursprünglich an die Ringdikke sowie Außendurchmesser angepaßt werden. Durch das Plattdrücken des Prüflings (1) an der Formbacke (2) wird ein bestimmter Teil gerade geformt, wodurch auf der Innenseite des Prüflings Zugspannungen auftreten, die Oberflächenfehler (z.B. Risse) verstärkt erkennen lassen.

Der andere Teil des Prüflings wird verstärkt umgebogen, d.h. der Biegeradius ist kleiner, als der normale Durchmesser, sodaß dadurch an der Aussenseite Zugkräfte auftreten, die dasselbe wie innen bewirken.

In diese Zonen der Zugkräfte werden CCD-Kameras (6) ausgerichtet, die ein analoges Bild aufnehmen, welches dann digital mittels rechnergestützter, elektronischer Bildverarbeitung ausgewertet wird.

Jede CCD-Kamera (6) umfaßt mindestens 90 Grad des Ringdicken-Umfangs, so daß mit 4 CCD-Kameras der komplette Ringdicken-Umfang betrachtet werden kann.

Verfahren nun die beiden Formbacken (2) gegenläufig, so wälzt sich der Ring (1) in Ovalform, so daß der komplette Ring-Umfang betrachtet werden kann.

Theoretisch wie praktisch bleibt der Lagenmittelpunkt des Prüflings (1) genau erhalten, so daß sich für die CCD-Kameras (6) keine Tiefenschärfeprobleme ergeben.

Die Länge der Formbacken (2) ergibt sich aus dem Aussenumfang des Prüflings + Zugabe.

Zur Entnahme des Prüflings (1) wird soweit auseinandergefahren bis die Formbacken (2) den Prüfling (1) freigeben. In dieser Stellung kann dann schon der nächste Prüfling (1) zugeführt werden.

Um absolut genau gleiche gegenläufige Bewegungen der Formbacken (2) zu erhalten, sind diese an einer Zahnstange (3) befestigt, in deren Mitte das Antriebsritzel (5) spielfrei montiert ist. Als Antrieb könnte beispielsweise ein Schrittmotor (7) vorgeschaltet sein.

Die Zahnstangen (3) in Gleitführungen (4) Kugelbüchsen oder Verschiebeschlitten gelagert, um einen ruhigen, schwingungsarmen Lauf abzugeben.

Erste Versuche ergaben, daß Rundringe mit einem Außendurchmesser von 15 mm und Ringdikke Durchmesser 3,5 mm, eine Oberflächenprüfzeit von ca. 8 sec. benötigen.

Die unsichere, manuelle Prüfung erfordert ca. 40-50 sec., so daß abgesehen von einer hundertprozentigen Prüfung die Wirtschaftlichkeit der Erfindung gegeben ist.

Erläuterungen zu den Abbildungen

1. Prüfling - Rundring, z.B. dickwandiger o-Ring
2. Formbacke
3. Rund-Zahnstange
4. Gleitführungen
5. Antriebsritzel
6. CCD-Kamera mit Objektiv
7. Schrittmotor

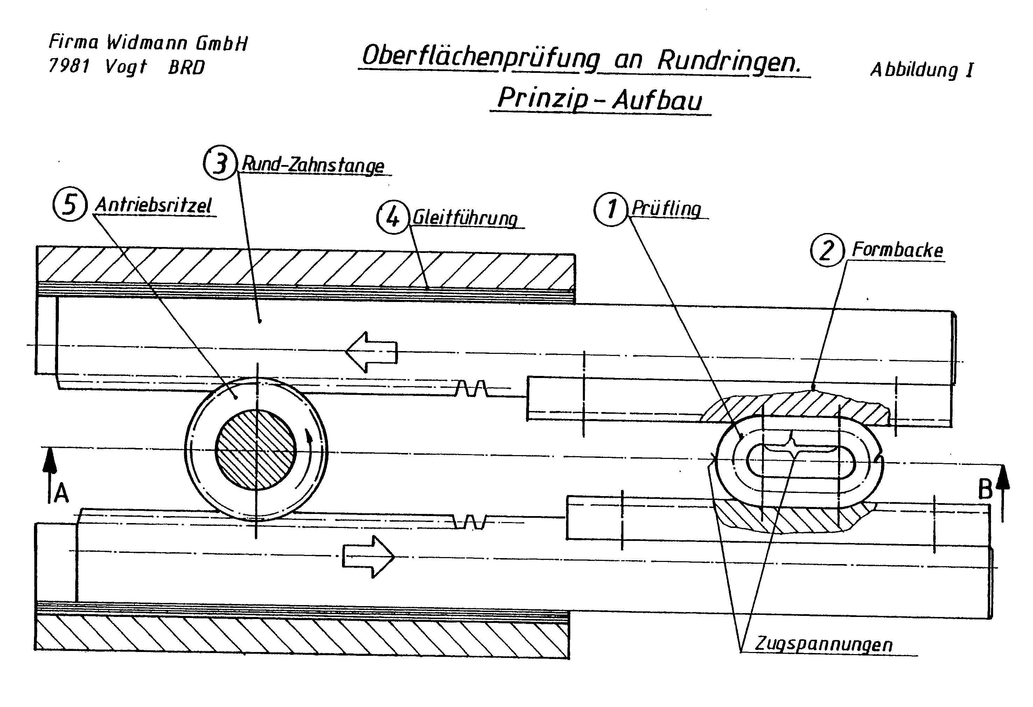

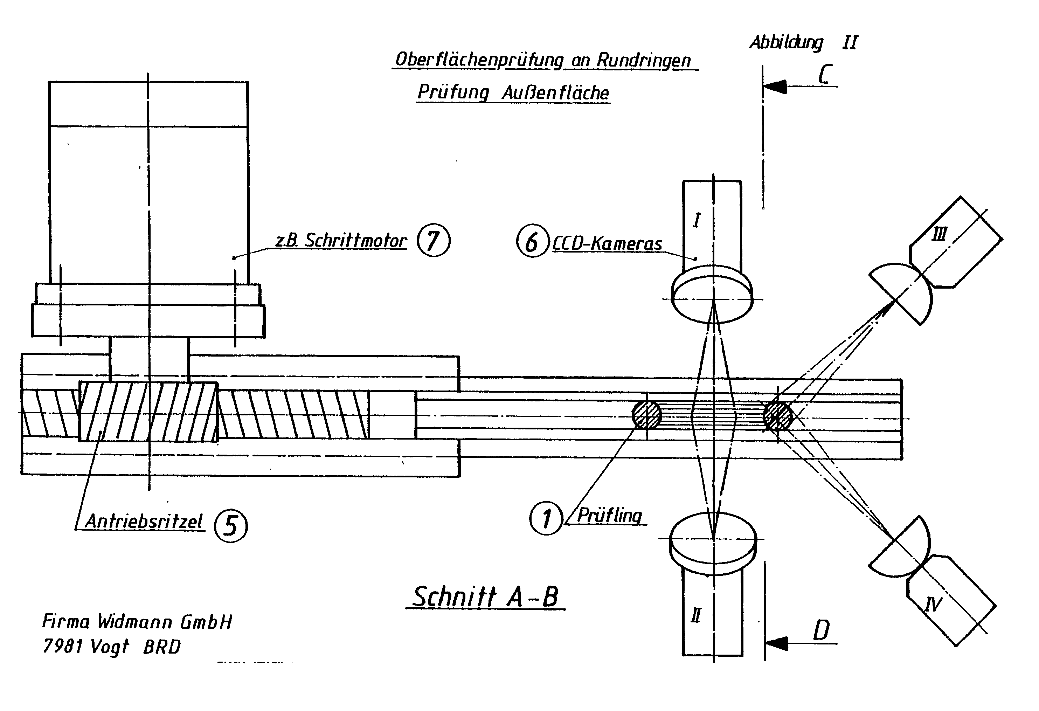

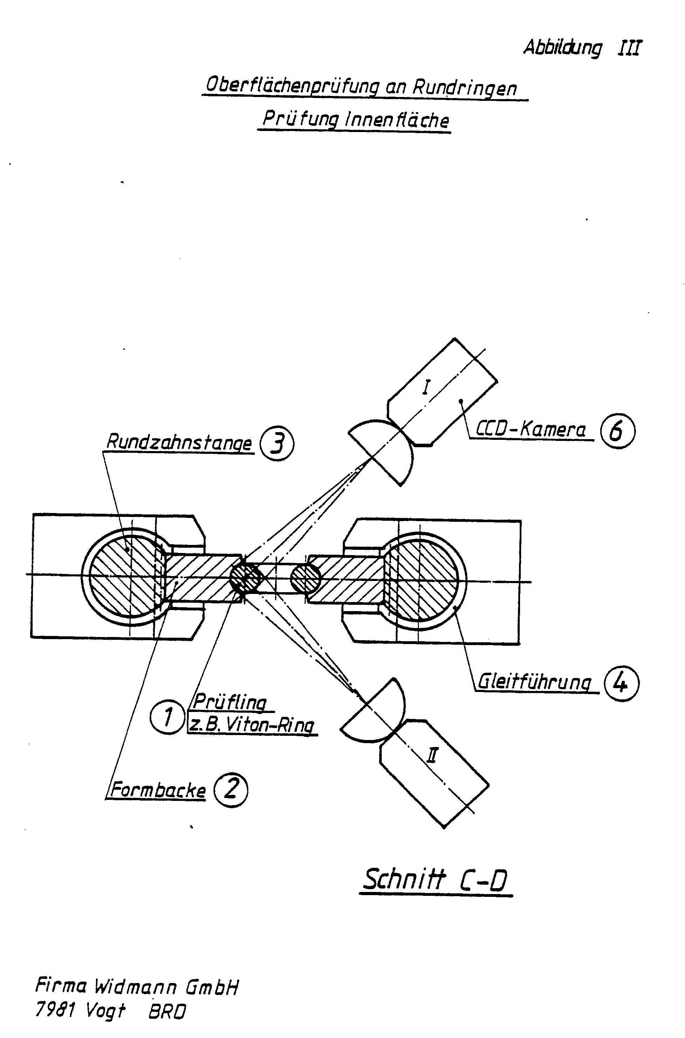

**Ansprüche**

1. Einrichtung zur Oberflächenprüfung von elastischen Rundringen, dadurch gekennzeichnet, daß der Prüfling (1) über 2 Formbacken (2) zu einer Ovalform gedrückt wird, wodurch am geraden Teil im inneren Halbkreis und im 180 Grad Teil im äußeren Halbkreis des Prüflings (1) Zugspannungen bewirkt werden, die Fehler in der Oberfläche verstärkt sichtbar werden lassen.

2. Einrichtung zur Oberflächenprüfung nach Anspruch (1) , dadurch gekennzeichnet, daß durch gegenseitiges Verschieben der Formbacken (2) sich der Prüfling (1) mit gleichbleibendem Mittelpunkt in den Formbacken (2) abwälzt.

3. Einrichtungen zur Oberflächenprüfung nach Anspruch (2) , dadurch gekennzeichnet, daß das gegenseitige Verschieben der Formbacken (2) über ein gemeinsames Ritzel (5) oder ähnliches auf die Zahnstangen (3) übertragen wird.

4. Einrichtungen zur Oberflächenprüfung nach Anspruch (2) , dadurch gekennzeichnet, daß zur Beschickung die Formbacken (2) gegenläufig ausfahren.

Firma Widmann GmbH
7981 Vogt BRD

**Oberflächenprüfung an Rundringen.**
**Prinzip – Aufbau**

Abbildung I

③ Rund-Zahnstange
⑤ Antriebsritzel
④ Gleitführung
① Prüfling
② Formbacke
Zugspannungen

A    B

EP 0 384 002 A2

Oberflächenprüfung an Rundringen

Prüfung Außenfläche

Abbildung II

z.B. Schrittmotor ⑦  ⑥ CCD-Kameras

Antriebsritzel ⑤

① Prüfling

Schnitt A-B

Firma Widmann GmbH
7981 Vogt BRD

EP 0 384 002 A2

Abbildung III

<u>Oberflächenprüfung an Rundringen</u>

<u>Prüfung Innenfläche</u>

Rundzahnstange ③

I

CCD-Kamera ⑥

Gleitführung ④

① Prüfling
z.B. Viton-Ring

Formbacke ②

II

<u>Schnitt C-D</u>

Firma Widmann GmbH
7981 Vogt   BRD